(19) Europäisches Patentamt
European Patent Office
Office européen des brevets

(11) Veröffentlichungsnummer : **0 491 285 B1**

(12) **EUROPÄISCHE PATENTSCHRIFT**

(45) Veröffentlichungstag der Patentschrift :
**12.01.94 Patentblatt 94/02**

(51) Int. Cl.$^5$ : **C09D 5/46,** C09D 127/12, C09D 131/02

(21) Anmeldenummer : **91121356.9**

(22) Anmeldetag : **12.12.91**

(54) **Fluorhaltiger Pulverlack.**

(30) Priorität : **15.12.90 DE 4040127**

(43) Veröffentlichungstag der Anmeldung :
**24.06.92 Patentblatt 92/26**

(45) Bekanntmachung des Hinweises auf die Patenterteilung :
**12.01.94 Patentblatt 94/02**

(84) Benannte Vertragsstaaten :
**AT BE CH DE DK ES FR GB IT LI LU NL SE**

(56) Entgegenhaltungen :
**EP-A- 0 150 430**

(73) Patentinhaber : **HOECHST AKTIENGESELLSCHAFT**
**D-65926 Frankfurt (DE)**

(72) Erfinder : **Schlipf, Michael, Dr.**
**Putzenlehnerstrasse 22**
**W-8269 Burgkirchen (DE)**
Erfinder : **Merten, Gerhard**
**Barbarossastrasse 27**
**W-6200 Wiesbaden (DE)**

**EP 0 491 285 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft einen fluorhaltigen Pulverlack.

Fluorhaltige Lacksysteme, die aus geeigneten vernetzungsfähigen Copolymeren und üblichen kalt- oder warmhärtenden Vernetzungsmitteln bestehen und aus organischer Lösungsmittelphase heraus hochbeständige korrosions- und wetterfeste Anstriche ergeben, sind in verschiedenen Varianten, besonders hinsichtlich der verwendeten fluorhaltigen Copolymeren, bekannt. Aus Gründen der Schonung der Umwelt und der Atmosphäre versucht man heute jedoch, stark lösungsmittelhaltige Lacksysteme nur noch dort einzusetzen, wo es unumgänglich notwendig ist. Daher wurde schon versucht, rein wäßrige oder wäßrigorganische Lacksysteme zu schaffen. Dem sind jedoch enge Grenzen gesetzt, da nur ein kleiner Teil der für Lacksysteme zur Verfügung stehenden fluorhaltigen Copolymeren für wäßrige Lacksysteme geeignet ist. Auch sind der erhöhte Energieaufwand und die erheblich verlängerte Trocknungszeit nachteilige Eigenschaften, letztere insbesondere wegen der erhöhten Anschmutzungsgefahr während der Trocknungsperiode. Es bestand daher die Aufgabe, diese Nachteile zu vermeiden.

Zur Lösung dieser Aufgabe stellt die vorliegende Erfindung einen fluorhaltigen Pulverlack zur Verfügung, enthaltend

a) 40 bis 80 Gew.-% eines vernetzbaren, fluorhaltigen Copolymeren, zusammengesetzt aus

α) 10 bis 60 Mol-% copolymerisierten Einheiten eines Vinylesters der allgemeinen Formel

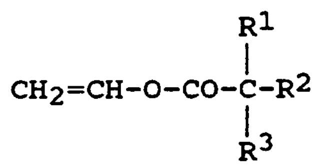 ,

worin $R^1$, $R^2$ und $R^3$ Alkylreste sind und wobei der gesamte Acylrest 9 C-Atome aufweist und aus Isomeren mit zwei quartären C-Atomen besteht, denen 0 bis 80 Mol-% Isomere, die ein quartäres C-Atom zusammen mit mindestens einem tertiären C-Atom im Acylrest aufweisen, beigemischt sind,

β) 20 bis 50 Mol-% copolymerisierten Einheiten eines OH-Gruppen enthaltenden Vinylmonomeren sowie aus

γ) copolymerisierten Einheiten eines Fluorolefins der allgemeinen Formel

$$CF_2{=}CFX\ ,$$

worin X = F, ein Perfluoralkylrest mit 1 bis 8 C-Atomen oder Cl ist, und zwar in einer Menge, die die Summe der Komponenten α) + β) + γ) auf 100 Mol-% ergänzt, jedoch mit der Maßgabe, daß mindestens 10 Mol-% dieses Fluorolefins im Copolymeren vorhanden sind, und

b) 20 bis 60 Gew.-% eines für Pulverlack-Formulierungen geeigneten Vernetzungsmittels.

Der im erfindungsgemäß eingesetzten Copolymeren a) enthaltene Vinylester der Komponente α) besitzt einen Acylrest der allgemeinen Formel

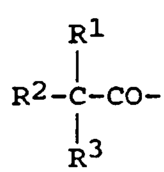 ,

der insgesamt 9 C-Atome aufweist und als besonderes Kennzeichen ein weiteres quartäres C-Atom neben dem zur CO-Gruppe alpha-ständigen quartären C-Atom der vorstehenden Formel. Dabei können diese Isomeren mit zwei quartären C-Atomen für sich allein - insbesondere als Gemisch - vorliegen oder aber 0 bis 80 Mol-% solcher Isomerer enthalten, die neben dem alpha-ständig zur CO-Gruppe angeordneten quartären C-Atom noch mindestens ein tertiäres C-Atom aufweisen.

Vorzugsweise ist der Acylrest dieser Vinylester ein Isomerengemisch, in dem neben den Isomeren mit zwei quartären C-Atomen auch noch 0,5 bis 80 Mol-% Isomere mit einem quartären und zwei tertiären C-Atomen im gleichen Molekül oder 0,5 bis 20 Mol-% Isomere mit einem quartären und einem tertiären C-Atom im gleichen Molekül enthalten sind. Es können auch alle drei genannten Spezies vorliegen, wobei die Anteile so auszuwählen sind, daß sie sich auf 100 ergänzen. Derartige stark verzweigte Vinylester widerstehen der Verseifung praktisch vollständig.

Die diesen Acylresten zugrundeliegenden hochgradig verzweigten Carbonsäuren lassen sich gewinnen durch Dimerisierung von Isobuten und anschließende Koch'sche Synthese dieser Dimeren mit Kohlenmonoxid und Wasser. Die entsprechenden Vinylester lassen sich gewinnen durch Transvinylierung mit Vinylacetat. Sie können aber auch nach der Reppe-Synthese durch Umsetzung der Carbonsäuren mit Acetylen erhalten werden.

Geeignete, OH-Gruppen enthaltende Vinylmonomere für die Komponente β) des Copolymeren sollen die für die Vernetzung im Lacksystem erforderlichen OH-Gruppen liefern. Diese Monomeren können OH-Gruppen als solche bereits enthalten, oder die OH-Gruppen können am bereits fertigen Copolymerisat aus Funktionen gebildet werden, die der Hydrolyse oder Alkoholyse zu OH-Gruppen zugänglich sind. Die erstere Art von solchen Monomeren sind vorzugsweise Hydroxyalkylvinylether mit einer Hydroxyalkylgruppe von 1 bis 6 C-Atomen. Solche Copolymere sind bekannt aus der US-Patentschrift 4 859 755. Die zweite Art von solchen Monomeren sind vorzugsweise Vinylester von kurzkettigen Carbonsäuren der Formel

$$CH_2{=}CH{-}O{-}CO{-}R^4 ,$$

worin $R^4$ den Methyl-, Ethyl- oder Propylrest darstellt, die verseifbar sind. Dies sind vor allem Vinylpropionat und insbesondere Vinylacetat.

Komponente γ) des erfindungsgemäßen Copolymeren ist ein Fluorolefin der allgemeinen Formel

$$CF_2{=}CFX ,$$

worin X = F, ein Perfluoralkylrest mit 1 bis 8 C-Atomen oder Cl ist, also beispielsweise Perfluorbuten-1, Perfluorocten-1, Perfluorhexen-1 und Perfluorisobuten, sowie vorzugsweise Hexafluorpropylen, Chlortrifluorethylen und insbesondere Tetrafluorethylen (TFE), die in den obengenannten Anteilen vorliegen, deren Anteil aber 10 Mol-%, vorzugsweise 20 Mol-%, nicht unterschreiten soll.

Die Herstellung der erfindungsgemäß eingesetzten Copolymeren erfolgt in der Weise, daß zunächst der verzweigtkettige Vinylester der Komponente α), das OH-Gruppen enthaltende Vinylmonomere der Komponente β) und das Fluorolefin der Komponente γ) der Copolymerisation unterworfen werden.

Das so gewonnene Copolymere - falls es einen der obengenannten Vinylester einer kurzkettigen Carbonsäure enthält - wird anschließend einer Nachbehandlung zwecks Verseifung der Einheiten dieses Vinylesters unterworfen, wobei der Begriff "Verseifung" hier die Esterspaltung durch Hydrolyse und/oder durch Alkoholyse umfassen soll. Dazu kann das pulverförmige Copolymere zunächst in einem Alkanol mit 1 bis 4 C-Atomen gelöst und dann mit Wasser gefällt werden. Auch kann die Verseifung mit wäßrigen Alkalien oder quaternären Ammoniumhydroxiden bewirkt werden.

Für die Aufarbeitung von in Lösung befindlichen Copolymeren wird zweckmäßigerweise ein Verfahren angewendet, bei dem

a) zunächst der Hauptteil des Lösungsmittels unter Normaldruck destillativ entfernt wird,

b) sodann die Restmonomeren durch Vakuumdestillation unter Zwangsförderung des hochviskosen Copolymeren entfernt werden,

c) dieses hochviskose Copolymere gelöst wird in einem Gemisch aus einem Alkanol mit 1 bis 4 C-Atomen und einem Lösungsmittel, wobei dieses Gemisch imstande sein soll, auch das verseifte Produkt homogen zu lösen, und

d) die Verseifung unter Zugabe eines alkalischen Agens durchgeführt, gegebenenfalls das Lösungsmittel aus c) destillativ abgetrennt und das verbleibende hochviskose Copolymere in einem Lacklösungsmittel gelöst wird, und

e) die entstandene Copolymerlösung einer Filtration unterworfen wird und anschließend das Lösungsmittel völlig entfernt wird.

Mit dem genannten Verfahren ist es möglich, die Einheiten des genannten Vinylesters in einem Anteil von 50 bis 100 %, vorzugsweise von 50 bis 80 %, in OH-Gruppen zu überführen und nach Mahlung ein feinpulvriges Copolymeres zu erhalten.

Zur Herstellung eines Pulverlacks wird das OH-Gruppen enthaltende pulverförmige Copolymere mit weiteren Komponenten vermischt und durch Extrudieren, Vorbrechen, Feinmahlen und durch eine abschließende Siebung unter Abtrennung des Überkorns von >125 µm in einen Pulverlack überführt.

Als Komponente b) enthält der erfindungsgemäße Pulverlack ein Vernetzungsmittel sowie zusätzlich gegebenenfalls Pigmente, Füllstoffe und sonstige Additive, wie beispielsweise UV-Absorber oder Verlaufmittel. Das Vernetzungsmittel der Komponente b) ist im erfindungsgemäßen Pulverlack zu 20 bis 60, vorzugsweise 25 bis 50 Gew.-% enthalten, während das fluorhaltige Copolymere a) 40 bis 80, vorzugsweise 50 bis 75 Gew.-% ausmacht.

Als Vernetzungsmittel (Härter) geeignet sind vorzugsweise blockierte aliphatische und aromatische Polyisocyanate, die entstehen durch Addition einer geeigneten Schutzgruppe, wie zum Beispiel einer Caprolactam- oder Phenolgruppierung, oder durch Dimerisierung unter Ringschluß. Dies sind zum Beispiel blockierte Polyisocyanate, wie sie durch die Firma Hoechst AG unter der Bezeichnung ®Additol XL 428, XL 432, XL 465,

VXL 9935 oder VXL 9946 in den Handel gebracht werden. Bei diesen Verbindungen sind die zur Vernetzung benötigten funktionellen Gruppen thermoreversibel blockiert, beispielsweise mit ε-Caprolactam, das unter Einbrennbedingungen abgespalten wird, wodurch die Vernetzung durch Ausbildung von Urethangruppen mit den OH-funktionellen Gruppen des fluorhaltigen Copolymeren stattfinden kann.

Als geeignete Blockierungsvariante ist auch die Ausbildung von Uretdion-Strukturen durch Dimerisierung von zwei Isocyanatgruppen möglich. In diesem Fall erhält man ein spaltproduktfreies Vernetzungsmittel, wie es zum Beispiel von der Firma Hüls AG unter der Bezeichnung ®IPDI BF 1540 am Markt angeboten wird.

Weiterhin geeignet als Härter für Pulverlacke auf Basis fluorhaltiger Copolymerer sind polyfunktionelle Carbonsäureanhydride, wie sie beispielsweise von der Firma Hoechst AG unter der Bezeichnung ®Beckopox Spezialhärter EH 694 vertrieben werden.

Für die Formulierung der Pulverlacke können ferner alle in der Pulverlackindustrie gängigen Pigmente und Extender eingesetzt werden, insbesondere Titandioxide, Eisenoxide, aber auch Cadmiumsulfid, Zinksulfid, Bleiweiß, Calciumcarbonat, Bariumsulfat, Phthalocyaninfarbstoffe, Bentone und Kreide. Vorzugsweise werden Titandioxide verwendet.

Ferner können auch für solche Lackrezepturen übliche Additive, wie beispielsweise Verlaufsmittel, Entgasungsmittel, Netzmittel, UV-Absorber oder Hilfsmittel zur Verbesserung von Glanz und Haftung zugesetzt werden.

Die Einzelkomponenten werden in pulvrigem Zustand vorgemischt und in einem beheizten Extruder mit einer Extrudattemperatur von 90 bis 110 °C aufgeschmolzen und dabei homogenisiert. Der Extrudatstrang wird nach Kühlen vorgebrochen und anschließend einer Feinmahlung unterzogen.

Der so formulierte fluorhaltige Pulverlack weist nach Siebung eine Korngröße von 10 bis 125, vorzugsweise 10 bis 70 μm auf. Vorzugsweise wird die Feinmahlung so eingestellt, daß ≧ 50 Gew.-% des Pulverlacks Teilchengrößen im Bereich 10 bis 32 μm besitzen.

Die unter Zusatz der genannten Vernetzungsmittel formulierten Pulverlacke ergeben Überzüge, die auf die verschiedensten Substrate aufgebracht und bei höheren Temperaturen eingebrannt werden können. Substrate dafür sind insbesondere Metalle, wie beispielsweise Eisen, Stahl, Aluminium, Kupfer, Bronze und Messing, aber auch andere metallüberzogene Oberflächen, wie Glas, Keramik und Beton.

Das Aufbringen erfolgt durch das Corona-Verfahren. Dabei wird der Pulverlack an einer geladenen Corona in der Auftragspistole vorbeigeführt und hierbei aufgeladen.

Es sind aber auch Beschichtungen herstellbar durch das triboelektrische oder das elektrokinetische Verfahren. Hierbei wird vom Prinzip der Reibungselektrizität Gebrauch gemacht. Der Pulverlack erhält dabei im Sprühgerät eine elektrostatische Aufladung, die der Ladung des Reibungspartners, üblicherweise eines Schlauchs oder Sprührohrs, beispielsweise aus Polytetrafluorethylen, entgegengesetzt ist. Auch eine Kombination beider Verfahren ist möglich.

Das Substrat kann vor dem Beschichtungsschritt auf Temperaturen von 120 bis 250 °C erhitzt werden, wobei die Schicht dann beim Aufbringen eingebrannt wird. Wenn man jedoch auf das kalte Substrat die Beschichtung aufbringt, so ist ein nachträgliches Erhitzen auf eine Temperatur im genannten Bereich erforderlich.

Beschichtungen auf Basis des erfindungsgemäßen Pulverlacks zeichnen sich insbesonders durch eine sehr hohe Witterungsbeständigkeit aus. Durch die höhere Antiadhäsivität im Vergleich zu Pulverlackbeschichtungen, die ohne das erfindungsgemäße fluorhaltige Copolymere hergestellt wurden, weisen diese Beschichtungssysteme ein geringeres Anschmutzverhalten auf.

Verbunden mit der erhöhten Witterungsbeständigkeit ist eine bessere Glanzerhaltung, so daß Objekte, die der Bewitterung ausgesetzt sind und die mit dem erfindungsgemäßen Pulverlack beschichtet worden sind, auch noch nach Ablauf von mehreren Jahren ihr ursprüngliches Erscheinungsbild besitzen.

Die Vorteile, die Pulverlacke im allgemeinen im Vergleich zu lösungsmittelhaltigen Lacken besitzen - zu nennen ist hier insbesondere die erhöhte Umweltfreundlichkeit durch Vermeidung von Lösungsmittelemissionen - gelten auch für die Beschichtungen, die auf Basis des erfindungsgemäßen Pulverlackbeschichtungssystems auf Fluorpolymerbasis hergestellt wurden.

Die Erfindung wird durch folgende Beispiele erläutert:

Beispiel 1

(Verwendung eines blockierten Polyisocyanats als Härter)

- Copolymeres aus 37 Mol-% an copolymerisierten TFE-Einheiten, 31 Mol-% an copolymerisierten Einheiten eines Vinylesters einer stark verzweigten Carbonsäure mit einem Acylrest von 9 C-Atomen (wobei im Acylrest ein Isomerengemisch vorliegt, enthaltend 28 Mol-% C-Ketten mit zwei quartären C-Atomen; 68 Mol-% C-Ketten mit einem quartären und zwei tertiären C-Atomen; 4 Mol-% C-Ketten mit einem quartären und einem tertiären C-Atom) und 32 Mol-% an copolymerisierten Einheiten des Vinylacetats; OH-Zahl nach Verseifung 115 574 g
- blockiertes Polyisocyanat (®IPDI BF 1540) 248 g
- Verlaufmittel (®Additol XL 496) 30 g
- Benzoin 5 g
- $TiO_2$ (®Kronos 2160) 300 g

Das Aufbringen des Pulverlackes erfolgt nach dem Corona-Verfahren bei einer Spannung von 60 kV. Substrat ist ein Eisenblech von 0,8 mm Stärke.

Der Pulverlack wird 20 Minuten lang bei 200 °C ausgehärtet. Schichtdicke des ausgehärteten Lacks 55 µm.

Die Beschichtung wird einem Schnellbewitterungstest (QUV) unterzogen mit folgendem Belastungszyklus:

UV-Bestrahlung bei 60 °C: 8 Stunden
Betauungsphase bei 40 °C: 4 Stunden

Die Änderung des Glanzes der Beschichtung während des Testes wird durch Messen des Prozentanteils an reflektierter Lichtintensität, bezogen auf 100 % eingestrahlte Lichtintensität, unter Spiegelreflexion (60°) der Oberfläche verfolgt (DIN-Norm 67 530). Die Ergebnisse sind in Tabelle 1 zusammengestellt.

Tabelle 1

| Zeit (h) | Glanzmessung unter Spiegelreflexion bei 60° (%) |
|---|---|
| 0 | 74 |
| 500 | 74 |
| 1000 | 73 |
| 1500 | 73 |
| 2000 | 71 |
| 2500 | 69 |
| 3000 | 69 |

Beispiel 2

(Verwendung eines Polyanhydrids als Härter)
- Copolymeres wie Beispiel 1 440 g
- Polyanhydrid (®Beckopox Spezialhärter EH 694) 180 g
- Verlaufmittel (®Additol XL 496) 30 g
- Benzoin 5 g
- $TiO_2$ (®Kronos 2160) 345 g

Der Pulverlack wird aufgebracht, wie in Beispiel 1 beschrieben, und 20 Minuten lang bei 180 °C ausgehärtet. Schichtdicke 55 µm. Die Beschichtung wird, wie in Beispiel 1 beschrieben, einem Schnellbewitterungstest unterworfen. Die Ergebnisse sind in Tabelle 2 zusammengestellt.

Tabelle 2

| Zeit (h) | Glanzmessung unter Spiegelreflexion bei 60° (%) |
|---|---|
| 0 | 76 |
| 500 | 75 |
| 1000 | 75 |
| 1500 | 73 |
| 2000 | 71 |
| 2500 | 70 |

Beispiele 3 und 4

(Verwendung eines blockierten aliphatischen Polyisocyanats als Härter)

| | Beispiel 3 | Beispiel 4 |
|---|---|---|
| - Copolymeres wie Beispiel 1 | 365 g | 335 g |
| - blockiertes aliphatisches Polyisocyanat (®Additol XL 432) | 330 g | 330 g |
| - Benzoin | 5 g | 5 g |
| - Verlaufmittel (®Additol XL 496) | - | 30 g |
| - $TiO_2$ (®Kronos 2160) | 300 g | 300 g |

Die Pulverlacke werden 10 Minuten bei 200 °C ausgehärtet. Die Schichtdicke des ausgehärteten Lackes beträgt 55 µm in beiden Beispielen. Die Lackformulierungen und die Beschichtungen werden den für Pulverlacke üblichen Tests unterworfen. Die Ergebnisse sind in Tabelle 3 zusammengefaßt.

Tabelle 3

| Test | Beispiel 3 | Beispiel 4 |
|---|---|---|
| Gelzeit 180 °C | 305 sec | 315 sec |
| Glanzmessung unter Spiegelreflexion (60°) nach DIN 67 530 | 79 % | 75 % |
| Verlauf *) | 1 | 2 |
| Krater *) | 0 | 0 |
| Erichsentiefung nach DIN 53 156 | 9,3 mm | 10,0 mm |
| Gitterschnitt*) nach DIN 53 151 | 1 | 1 |
| Schlagprüfung nach ASTM D 2794 vorderseitig<br>rückseitig | 60 ip<br>12 ip | 120 ip<br>80 ip |
| Butylacetattest *) 3 min | 2 | 3 |
| Xyloltest *) 30 min | 2 | 2 |

*) Prüfung visuell, Benotung nach DIN 53 230

0 = sehr gut

bis

5 = sehr schlecht

Prüfung auf Lösungsmittelbeständigkeit:

Butylacetattest, Xyloltest:

Ein Wattebausch wird mit dem jeweiligen Lösungsmittel getränkt und mittels eines Glasringes, der einen Durchmesser von 15 bis 20 mm und eine Höhe von 1,5 bis 2,0 cm hat, auf die zu prüfende Beschichtung gepreßt. Nach der genannten Einwirkzeit wird der Wattebausch entfernt und die Lösemitteleinwirkung visuell geprüft. Die Benotung erfolgt visuell nach DIN 53 230.

Beispiele 5 und 6

(Verwendung eines blockierten spaltproduktfreien Polyisocyanats als Härter)

| | Beispiel 5 | Beispiel 6 |
|---|---|---|
| - Copolymeres wie Beispiel 1 | 442 g | 365 g |
| - blockiertes Polyisocyanat (®IPDI BF 1540) | 356 g | 253 g |
| - UV-Stabilisator (®Tinuvin 292) | 10 g | - |
| - UV-Absorber (®Tinuvin 1130) | 10 g | - |
| - Benzoin | 5 g | 5 g |
| - $TiO_2$ (®Kronos 2160) | - | 300 g |

Die Pulverlacke werden 20 Minuten lang bei 190 °C ausgehärtet. Die Schichtdicke des ausgehärteten Lackes beträgt 60 µm in Beispiel 5 und 55 µm in Beispiel 6. Die Lackformulierungen und die Beschichtungen werden den obengenannten Tests unterworfen. Die Ergebnisse sind in Tabelle 4 zusammengefaßt.

Tabelle 4

| Test | Beispiel 5 | Beispiel 6 |
|---|---|---|
| Gelzeit 180 °C | 100 sec | 140 sec |
| Glanzmessung unter Spiegelreflexion (60°) nach DIN 67 530 | 98 % | 84 % |
| Verlauf *) | 2 | 3 |
| Krater *) | 0 | 0 |
| Erichsentiefung nach DIN 53 156 | 8,5 mm | 6,5 mm |
| Gitterschnitt*) nach DIN 53 151 | 3 | 2 |
| Schlagprüfung nach ASTM D 2794 vorderseitig / rückseitig | 24 ip / 4 ip | 20 ip / 4 ip |
| Butylacetattest *) 3 min | 0 | 0 |
| Xyloltest *) 30 min | 0 | 0 |

*) Prüfung visuell, Benotung nach DIN 53 230
0 = sehr gut
bis
5 = sehr schlecht

Beispiel 7

(Vergleichsbeispiel für einen fluorfreien Pulverlack)

- Hydroxyfunktionelles Polyesterharz (®Alftalat AN 739) 470 g
- Blockiertes aliphatisches Polyisocyanat (®Additol XL 432) 195 g
- Verlaufmittel (®Additol XL 496) 30 g
- Benzoin 5 g
- $TiO_2$ (®Kronos 2160) 300 g

Der Pulverlack wird aufgebracht, wie in Beispiel 1 beschrieben, und 20 Minuten lang bei 200 °C ausgehärtet. Die Schichtdicke beträgt 50 µm. Die Lackformulierung und die Beschichtung werden den für Pulverlacke üblichen Tests unterworfen. Die Ergebnisse sind in Tabelle 5 zusammengestellt.

Tabelle 5

| Test | Ergebnis |
|---|---|
| Gelzeit 180 °C | 450 sec |
| Glanzmessung unter Spiegelreflexion (60°) nach DIN 67 530 | 94 % |
| Verlauf *) | 2 |
| Krater *) | 0 |
| Erichsentiefung nach DIN 53 156 | 11,2 mm |
| Gitterschnitt*) nach DIN 53 151 | 0 |
| Schlagprüfung nach ASTM D 2794 vorderseitig<br>rückseitig | 40 ip<br>20 ip |
| Butylacetattest *) 3 min | 4 |
| Xyloltest *) 30 min | 5 |

*) Prüfung visuell, Benotung nach DIN 53 230

0 = sehr gut

bis

5 = sehr schlecht

Die Pulverlackbeschichtung wird einem Schnellbewitterungstest (QUV) unterzogen, wie in Beispiel 1 angegeben, jedoch mit folgendem Belastungszyklus:

UV-Bestrahlung bei 70 °C: 8 Stunden

Betauungsphase bei 50 °C: 4 Stunden

Die Ergebnisse sind in Tabelle 6 zusammengestellt.

Tabelle 6

| Zeit (h) | Glanzmessung unter Spiegelreflexion bei 60° (%) |
|---|---|
| 0 | 92 |
| 100 | 92 |
| 200 | 92 |
| 300 | 81 |
| 400 | 40 |
| 500 | 26 |
| 600 | 20 |

## Patentansprüche

### Patentansprüche für folgende Vertragsstaaten : AT, BE, CH, DE, DK, FR, GB, IT, LI, LU, NL, SE

**1.** Fluorhaltiger Pulverlack, enthaltend

a) 40 bis 80 Gew.-% eines vernetzbaren, fluorhaltigen Copolymeren, zusammengesetzt aus

α) 10 bis 60 Mol-% copolymerisierten Einheiten eines Vinylesters der allgemeinen Formel

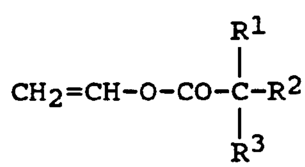

,

worin $R^1$, $R^2$ und $R^3$ Alkylreste sind und wobei der gesamte Acylrest 9 C-Atome aufweist und aus Isomeren mit zwei quartären C-Atomen besteht, denen 0 bis 80 Mol-% Isomere, die ein quartäres C-Atom zusammen mit mindestens einem tertiären C-Atom im Acylrest aufweisen, beigemischt sind,

β) 20 bis 50 Mol-% copolymerisierten Einheiten eines OH-Gruppen enthaltenden Vinylmonomeren sowie aus

γ) copolymerisierten Einheiten eines Fluorolefins der allgemeinen Formel

$$CF_2=CFX ,$$

worin X = F, ein Perfluoralkylrest mit 1 bis 8 C-Atomen oder Cl ist, und zwar in einer Menge, die die Summe der Komponenten α) + β) + γ) auf 100 Mol-% ergänzt, jedoch mit der Maßgabe, daß mindestens 10 Mol-% dieses Fluorolefins im Copolymeren vorhanden sind, und

b) 20 bis 60 Gew.-% eines für Pulverlack-Formulierungen geeigneten Vernetzungsmittels.

**2.** Fluorhaltiger Pulverlack gemäß Anspruch 1, dadurch gekennzeichnet, daß er aus 50 bis 75 Gew.-% eines vernetzbaren, fluorhaltigen Copolymeren der Komponente a) und 25 bis 50 Gew.-% eines Vernetzungsmittels der Komponente b) besteht.

**3.** Fluorhaltiger Pulverlack gemäß einem oder mehreren der Ansprüche 1 und 2, dadurch gekennzeichnet,

daß die Komponente β) des fluorhaltigen Copolymeren gebildet ist aus copolymerisierten Einheiten eines Vinylesters der allgemeinen Formel

$$CH_2=CH-O-CO-R^4 ,$$

worin $R^4$ ein geradkettiger Alkylrest mit 1 bis 3 C-Atomen ist und wobei 50 bis 100 % der copolymerisierten Einheiten dieses Vinylesters β) in der durch Solvolyse erhaltenen OH-Form vorliegen.

4. Fluorhaltiger Pulverlack gemäß einem oder mehreren der Ansprüche 1 bis 3, dadurch gekennzeichnet, daß copolymerisierte Einheiten des Fluorolefins der Komponente γ) in einer Menge vorliegen, die die Summe der Komponenten α) + β) + γ) auf 100 Mol-% ergänzt, jedoch mit der Maßgabe, daß mindestens 20 Mol-% im Copolymeren vorhanden sind.

5. Fluorhaltiger Pulverlack gemäß einem oder mehreren der Ansprüche 1 bis 4, dadurch gekennzeichnet, daß das Fluorolefin der Komponente γ) Tetrafluorethylen ist.

6. Verwendung des fluorhaltigen Pulverlacks gemäß einem oder mehreren der Ansprüche 1 bis 5 zur Beschichtung metallischer oder metallüberzogener Substrate mittels elektrostatischer Pulverauftragsverfahren.

**Patentansprüche für folgenden Vertragsstaat : ES**

1. Verfahren zur Herstellung von Überzügen nach der Methode der Pulverbeschichtung mit pulverförmigem Fluorpolymerharz, dadurch gekennzeichnet, daß mit einem fluorhaltigen Pulverlack beschichtet wird, enthaltend

   a) 40 bis 80 Gew.-% eines vernetzbaren, fluorhaltigen Copolymeren, zusammengesetzt aus

   α) 10 bis 60 Mol-% copolymerisierten Einheiten eines Vinylesters der allgemeinen Formel

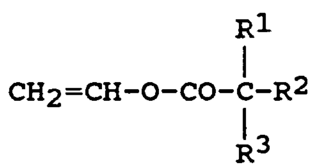
,

   worin $R^1$, $R^2$ und $R^3$ Alkylreste sind und wobei der gesamte Acylrest 9 C-Atome aufweist und aus Isomeren mit zwei quartären C-Atomen besteht, denen 0 bis 80 Mol-% Isomere, die ein quartäres C-Atom zusammen mit mindestens einem tertiären C-Atom im Acylrest aufweisen, beigemischt sind,

   β) 20 bis 50 Mol-% copolymerisierten Einheiten eines OH-Gruppen enthaltenden Vinylmonomeren sowie aus

   γ) copolymerisierten Einheiten eines Fluorolefins der allgemeinen Formel

$$CF_2=CFX ,$$

   worin X = F, ein Perfluoralkylrest mit 1 bis 8 C-Atomen oder Cl ist, und zwar in einer Menge, die die Summe der Komponenten α) + β) + γ) auf 100 Mol-% ergänzt, jedoch mit der Maßgabe, daß mindestens 10 Mol-% dieses Fluorolefins im Copolymeren vorhanden sind, und

   b) 20 bis 60 Gew.-% eines für Pulverlack-Formulierungen geeigneten Vernetzungsmittels.

2. Verfahren zur Herstellung von Überzügen nach der Methode der Pulverbeschichtung gemäß Anspruch 1, dadurch gekennzeichnet, daß mit einem fluorhaltigen Pulverlack beschichtet wird, der aus 50 bis 75 Gew.-% eines vernetzbaren, fluorhaltigen Copolymeren der Komponente a) und 25 bis 50 Gew.-% eines Vernetzungsmittels der Komponente b) besteht.

3. Verfahren zur Herstellung von Überzügen nach der Methode der Pulverbeschichtung gemäß einem oder mehreren der Ansprüche 1 und 2, dadurch gekennzeichnet, daß mit einem fluorhaltigen Pulverlack beschichtet wird, dessen Komponente β) des fluorhaltigen Copolymeren a) gebildet ist aus copolymerisierten Einheiten eines Vinylesters der allgemeinen Formel

$$CH_2=CH-O-CO-R^4 ,$$

worin $R^4$ ein geradkettiger Alkylrest mit 1 bis 3 C-Atomen ist und wobei 50 bis 100 % der copolymerisierten Einheiten dieses Vinylesters β) in der durch Solvolyse erhaltenen OH-Form vorliegen.

4. Verfahren zur Herstellung von Überzügen nach der Methode der Pulverbeschichtung gemäß einem oder mehreren der Ansprüche 1 bis 3, dadurch gekennzeichnet, daß mit einem fluorhaltigen Pulverlack beschichtet wird, in dessen fluorhaltigem Copolymeren a) copolymerisierte Einheiten des Fluorolefins der Komponente γ) in einer Menge vorliegen, die die Summe der Komponenten α) + β) + γ) auf 100 Mol-% ergänzt, jedoch mit der Maßgabe, daß mindestens 20 Mol-% im Copolymeren vorhanden sind.

5. Verfahren zur Herstellung von Überzügen nach der Methode der Pulverbeschichtung gemäß einem oder mehreren der Ansprüche 1 bis 4, dadurch gekennzeichnet, daß mit einem fluorhaltigen Pulverlack beschichtet wird, in dessen fluorhaltigem Copolymeren a) das Fluorolefin der Komponente γ) Tetrafluorethylen ist.

6. Überzogener Gegenstand, dadurch gekennzeichnet, daß er mit einem fluorhaltigen Pulverlack gemäß einem oder mehreren der Ansprüche 1 bis 5 überzogen ist.

## Claims

### Claims for the following Contracting States : AT, BE, CH, DE, DK, FR, GB, IT, LI, LU, NL, SE

1. A fluorine-containing powder coating, comprising

   a) 40 to 80% by weight of a crosslinkable, fluorine-containing copolymer, composed of

   α) 10 to 60 mol% of copolymerized units of a vinyl ester of the general formula

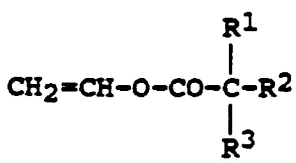

,

   in which $R^1$, $R^2$ and $R^3$ are alkyl radicals, the complete acyl radical having 9 carbon atoms and being composed of isomers with two quaternary carbon atoms, to which 0 to 80 mol% of isomers containing one quaternary carbon atom together with at least one tertiary carbon atom in the acyl radical are admixed,

   β) 20 to 50 mol% of copolymerized units of a vinyl monomer containing OH groups, and of

   γ) copolymerized units of a fluoroolefin of the general formula

$$CF_2=CFX,$$

   in which X = F, a perfluoroalkyl radical having 1 to 8 carbon atoms or Cl, especially in an amount which makes the total of components α) + β) + γ) up to 100 mol%, but with the proviso that at least 10 mol% of this fluoro-olefin is present in the copolymer, and

   b) 20 to 60% by weight of a crosslinking agent suitable for powder coating formulations.

2. A fluorine-containing powder coating as claimed in claim 1, which is composed of 50 to 75% by weight of a crosslinkable, fluorine-containing copolymer of component a) and 25 to 50% by weight of a crosslinking agent of component b).

3. A fluorine-containing powder coating as claimed in one or more of claims 1 and 2, wherein component β) of the fluorine-containing copolymer is formed from copolymerized units of a vinyl ester of the formula

$$CH_2=CH-O-CO-R^4,$$

   in which $R^4$ is a straight-chain alkyl radical having 1 to 3 carbon atoms, 50 to 100% of the copolymerized units of this vinyl ester β) being in the OH form obtained by solvolysis.

4. A fluorine-containing powder coating as claimed in one of more of claims 1 to 3, wherein copolymerized units of the fluoroolefin of component γ) are present in an amount which makes the total of the components α) + β) + γ)up to 100 mol%, but with the proviso that at least 20 mol% is present in the copolymer.

5. A fluorine-containing powder coating as claimed in one or more of claims 1 to 4, wherein the fluoro-olefin of component γ) is tetrafluoroethylene.

**6.** The use of the fluorine-containing powder coating as claimed in one or more of claims 1 to 5 for coating metallic or metal-coated substrates by means of electrostatic powder application processes.

**Claims for the following Contracting State : ES**

**1.** A process for the preparation of coatings according to the method of powder coating with a fluoro-polymer resin powder, characterized by coating with a fluorine-containing powder coating, containing

a) 40 to 80% by weight of a crosslinkable, fluorine-containing copolymer, composed of

α) 10 to 60 mol% of copolymerized units of a vinyl ester of the general formula

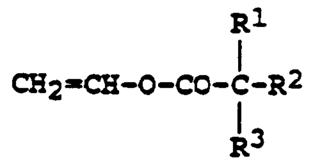

,

in which $R^1$, $R^2$ and $R^3$ are alkyl radicals, the complete acyl radical having 9 carbon atoms and being composed of isomers with two quaternary carbon atoms, to which 0 to 80 mol% of isomers containing one quaternary carbon atom together with at least one tertiary carbon atom in the acyl radical are admixed,

β) 20 to 50 mol% of copolymerized units of a vinyl monomer containing OH groups, and of

γ) copolymerized units of a fluoroolefin of the general formula

$$CF_2=CFX,$$

in which X = F, a perfluoroalkyl radical having 1 to 8 carbon atoms or Cl, especially in an amount which makes the total of components α) + β) + γ) up to 100 mol%, but with the proviso that at least 10 mol% of this fluoro-olefin is present in the copolymer, and

b) 20 to 60% by weight of a crosslinking agent suitable for powder coating formulations.

**2.** A process for the preparation of coatings according to the method of powder coating as claimed in claim 1, characterized by coating with a fluorine-containing powder coating composed of 50 to 75% by weight of a crosslinkable, fluorine-containing copolymer of component a) and 25 to 50% by weight of a crosslinking agent of component b).

**3.** A process for the preparation of coatings according to the method of powder coating as claimed in one or more of claims 1 to 2, characterized by coating with a fluorine-containing powder coating, wherein component β) of the fluorine-containing copolymer is formed from copolymerized units of a vinyl ester of the formula

$$CH_2=CH\text{-}O\text{-}CO\text{-}R^4,$$

in which $R^4$ is a straight-chain alkyl radical having 1 to 3 carbon atoms, 50 to 100% of the copolymerized units of this vinyl ester β) being in the OH form obtained by solvolysis.

**4.** A process for the preparation of coatings according to the method of powder coating as claimed in one or more of claims 1 to 3, characterized by coating with a fluorine-containing powder coating, wherein copolymerized units of the fluoroolefin of component γ) are present in an amount which makes the total of the components α) + β) + γ) up to 100 mol%, but with the proviso that at least 20 mol% is present in the copolymer.

**5.** A process for the preparation of coatings according to the method of powder coating as claimed in one or more of claims 1 to 4, characterized by coating with a fluorine-containing powder coating, wherein the fluoroolefin of component γ) is tetrafluoro-ethylene.

**6.** A coated article, characterized in that it is coated with a fluorine-containing powder coating as claimed in one or more of claims 1 to 5.

## Revendications

### Revendications pour les Etats contractants suivants : AT, BE, CH, DE, DK, FR, GB, IT, LI, LU, NL, SE

**1.** Peinture en poudre fluorée contenant

a) de 40 à 80 % en poids d'un copolymère fluoré réticulable ayant la composition suivante :

$\alpha$) de 10 à 60 % en moles de motifs copolymérisables d'un ester vinylique ayant la formule générale suivante

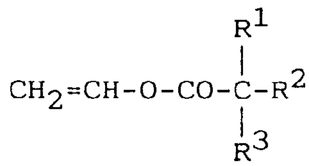

dans laquelle $R^1$, $R^2$ et $R^3$ sont des radicaux alkyle, le radical acyle ayant en tout 9 atomes de carbone et étant constitué d'isomères comportant 2 atomes de carbone quaternaires, auxquels on mélange de 0 à 80 % en moles d'isomères comportant dans le radical acyle 1 atome de carbone quaternaire en même temps qu'au moins 1 atome de carbone tertiaire,

$\beta$) de 20 à 50 % en moles de motifs copolymérisés d'un monomère vinylique contenant des groupes OH, et

gamma) des motifs copolymérisés d'une fluorooléfine de formule générale

$$CF_2=CFX,$$

où X est F, un radical perfluoralkyle ayant de 1 à 8 atomes de carbone ou Cl, en une quantité telle que la somme des composants $\alpha$) + $\beta$) + gamma) soit de 100 % en moles, mais du moment qu'au moins 10 % en moles de cette fluorooléfine sont présents dans le copolymère, et

b) de 20 à 60 % en poids d'un agent de réticulation convenant aux formulations de peinture en poudre.

**2.** Peinture en poudre fluorée selon la revendication 1, caractérisée en ce qu'elle est constituée de 50 à 75 % en poids d'un copolymère fluoré réticulable du composant a) et de 25 à 50 % en poids d'un agent de réticulation du composant b).

**3.** Peinture en poudre fluorée selon l'une ou plusieurs des revendications 1 et 2, caractérisée en ce que le composant $\beta$) du copolymère fluoré est formé de motifs copolymérisés d'un ester vinylique de formule générale

$$CH_2=CH\text{-}O\text{-}CO\text{-}R^4$$

dans laquelle $R^4$ est un radical alkyle à chaîne droite ayant de 1 à 3 atomes de carbone, 50 à 100 % des motifs copolymérisés de cet ester vinylique $\beta$) étant présents dans la forme OH obtenue par solvolyse.

**4.** Peinture en poudre fluorée selon l'une ou plusieurs des revendications 1 à 3, caractérisée en ce que les motifs copolymérisés de la fluorooléfine du composant gamma) sont présents en une quantité qui complète à 100 % en moles la somme des composants $\alpha$) + $\beta$) + gamma), mais qu'au moins 20 % en moles se trouvent dans le copolymère.

**5.** Peinture en poudre fluorée selon l'une ou plusieurs des revendications 1 à 4, caractérisée en ce que la fluorooléfine du composant gamma) est le tétrafluoréthylène.

**6.** Utilisation de la peinture en poudre fluorée selon l'une ou plusieurs des revendications 1 à 5, pour enduire des subjectiles métalliques ou revêtus d'un métal, par le procédé électrostatique d'application de poudres.

### Revendications pour l'Etat contractant suivant : ES

**1.** Procédé pour préparer des revêtements, par la technique d'application de poudre , avec une résine de fluoropolymère en poudre, caractérisé en ce qu'on procède au revêtement avec une peinture en poudre fluorée contenant

a) de 40 à 80 % en poids d'un copolymère fluoré réticulable ayant la composition suivante :

α) de 10 à 60 % en moles de motifs copolymérisables d'un ester vinylique ayant la formule générale suivante

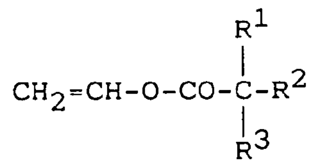

dans laquelle $R^1$, $R^2$ et $R^3$ sont des radicaux alkyle, le radical acyle ayant en tout 9 atomes de carbone et étant constitué d'isoméres comportant 2 atomes de carbone quaternaires, auxquels on mélange de 0 à 80 % en moles d'isomères comportant dans le radical acyle 1 atome de carbone quaternaire en même temps qu'au moins 1 atome de carbone tertiaire,

β) de 20 à 50 % en moles de motifs copolymérisés d'un monomère vinylique contenant des groupes OH, et

gamma) des motifs copolymérisés d'une fluorooléfine de formule générale

$$CF_2=CFX,$$

où X est F, un radical perfluoralkyle ayant de 1 à 8 atomes de carbone ou Cl, en une quantité telle que la somme des composants α) + β) + gamma) soit de 100 % en moles, mais du moment qu'au moins 10 % en moles de cette fluorooléfine sont présents dans le copolymère, et

b) de 20 à 60 % en poids d'un agent de réticulation convenant aux formulations de peinture en poudre.

**2.** Procédé pour préparer des revêtements par la technique d'application de poudre selon la revendication 1, caractérisé en ce qu'on procède au revêtement avec une peinture en poudre fluorée, constituée de 50 à 75 % en poids d'un copolymère fluoré réticulable du composant a) et de 25 à 50 % en poids d'un agent de réticulation du composant b).

**3.** Procédé pour préparer des revêtements par la technique d'application de poudre selon l'une ou plusieurs des revendications 1 et 2, caractérisé en ce qu'on procède au revêtement avec une peinture en poudre fluorée, dans laquelle le composant β) du copolymère fluoré est formé de motifs copolymérisés d'un ester vinylique de formule générale

$$CH_2=CH-O-CO-R^4$$

dans laquelle $R^4$ est un radical alkyle à chaîne droite ayant de 1 à 3 atomes de carbone, 50 à 100 % des motifs copolymérisés de cet ester vinylique β) étant présents dans la forme OH obtenue par solvolyse.

**4.** Procédé pour préparer des revêtements par la technique d'application de poudre selon l'une ou plusieurs des revendications 1 à 3, caractérisé en ce qu'on procède au revêtement avec une peinture en poudre fluorée dans le copolymère fluoré a) de laquelle les motifs copolymérisés de la fluorooléfine du composant gamma) sont présents en une quantité qui complète à 100 % en moles la somme des composants α) + β) + gamma), mais qu'au moins 20 % en moles se trouvent dans le copolymère.

**5.** Procédé pour préparer des revêtements par la technique d'application de poudre selon l'une ou plusieurs des revendications 1 à 4, caractérisé en ce qu'on procède au revêtement avec une peinture en poudre fluorée dans le copolymére fluoré a) de laquelle la fluorooléfine du composant gamma) est le tétrafluoréthylène.

**6.** Objet revêtu, caractérisé en ce qu'il est revêtu d'une peinture en poudre fluorée selon l'une ou plusieurs des revendications 1 à 5.